# EUROPÄISCHE PATENTSCHRIFT

(11) **EP 1 631 489 B1**
(45) Veröffentlichungstag und Bekanntmachung des Hinweises auf die Patenterteilung: **06.09.2006**
(21) Anmeldenummer: 04764529.6
(22) Anmeldetag: 27.08.2004
(51) Int. Cl.: B63B 21/00, G01N 3/08

(54) **VERFAHREN ZUM BESTIMMEN DER RESTLEBENSDAUER VON TROSSEN**
METHOD FOR DETERMINING REMAINING OPERATIONAL LIFE OF A CABLE
PROCEDE DE DETERMINATION DE LA DUREE DE VIE RESTANTE DE FILINS

(30) Priorität: 04.09.2003 DE 10340713
(43) Veröffentlichungstag der Anmeldung: 08.03.2006
(73) Patentinhaber: STEAG Aktiengesellschaft, 45128 Essen (DE)
(72) Erfinder: NOWACK, Ralf, 45481 Mülheim (DE)
(74) Vertreter: Zenz, Joachim Klaus
(86) Internationale Anmeldenummer: PCT/EP2004/009555
(87) Internationale Veröffentlichungsnummer: WO 2005/023635

(56) Entgegenhaltungen:
- US-A- 4 562 743
- US-A- 5 016 026
- US-A1- 2003 052 695

## Beschreibung

Die Erfindung betrifft ein Verfahren zum Bestimmen der Restlebensdauer von aus Einzelfäden bestehenden elastischen Trossen, die zum Vertäuen eines Wasserfahrzeugs an einer zugehörigen Boje dienen.

Steht kein geschützter Hafen zur Verfügung, müssen große Schiffe vor der Küste in kleinere Wasserfahrzeuge entladen werden. Letztere können die Küste auch nur bei entsprechend günstigen Wetterbedingungen anlaufen. Schlechtes Wetter muß vor der Küste abgewartet werden. Sofern die kleineren Wasserfahrzeuge über einen eigenen Motor verfügen, können sie das schlechte Wetter vor der Küste "abreiten". Dies verbietet sich bei Wasserfahrzeugen ohne eigenen Antrieb. Diese werden daher so lange an einer zugehörigen Boje vertäut, bis die Wetterbedingungen ein Anlaufen der Küste gestatten.

Man verwendet hierzu die aus Einzelfäden bestehenden elastischen Trossen, und zwar in der Regel eine einzige Trosse pro Wasserfahrzeug. Elastisch müssen die Trossen deshalb sein, weil sonst die auftretenden Belastungen nicht aufgenommen werden könnten. Durch die Elastizität der Trossen lassen sich die auftretenden Belastungen von größenordnungsmäßig einigen tausend Tonnen auf größenordnungsmäßig einige hundert Tonnen reduzieren. Voraussetzung ist, daß sich die Trossen unter Extrembedingungen um mehr als 30 % dehnen lassen.

Erfahrungsgemäß eignen sich hierzu Trossen aus Nylon-Einzelfäden mit einer Länge von mehreren hundert Metern und einem Durchmesser von 10 bis 20 cm. Derartige Trossen sind naturgemäß teuer. Auch fallen für Installationsarbeiten, Transport, Mobilisierung, Gebühren etc. erhebliche Kosten an.

Bisher besteht keine Möglichkeit, die Lebensdauer der Trossen zuverlässig abzuschätzen. Die Hersteller schreiben daher vor, die Trossen aus Sicherheitsgründen nach 6 bis 12 Monaten auszuwechseln.

Der Erfindung liegt die Aufgabe zugrunde, eine lebensdauergerechte Auswechslung der Trossen zu ermöglichen.

Zur Lösung dieser Aufgabe kennzeichnet sich das erfindungsgemäße Verfahren dadurch, daß
- für die Fäden der Trosse durch dynamische Versuche eine Ermüdungskurve erstellt wird,
- aus dem Material der Trosse eine Test-Trosse hergestellt wird, die aus einer Reihe von lösbar aneinander befestigten Abschnitten besteht,
- die Mindestbruchlast der Abschnitte der Test-Trosse ermittelt wird,
- das Wasserfahrzeug mit einer der elastischen Trossen unter Zwischenschaltung eines Lastüberwachungssystems an der zugehörigen Boje vertäut wird,
- benachbart zur elastischen Trosse die Test-Trosse ausgelegt wird,
- von der Test-Trosse in vorgegebenen Zeitabständen Abschnitte abgenommen werden,
- für jeden abgenommenen Abschnitt der Test-Trosse die Mindestbruchlast ermittelt und unter Bezugnahme auf die ursprüngliche Mindestbruchlast ein erster Koeffizient A gebildet wird, welcher den Tragkraftverlust in Folge der Umwelteinflüsse abbildet,
- aus den für sämtliche Abschnitte der Test-Trosse ermittelten Koeffizienten A ein umweltabhängiges Diagramm über der Zeit erstellt wird,
- jedem ersten Koeffizienten (A) ein zweiter Koeffizient (B) zugeordnet wird, der für den Zeitpunkt der Abnahme des zugehörigen Abschnitts der Test-Trosse auf der Basis des vom Lastüberwachungssystem gelieferten Lastspektrums (Belastungshäufigkeit und -stärke über der Zeit) aus der Ermüdungskurve ermittelt wird und den Tragkraftverlust in Folge der Lasteinflüsse abbildet,
- die Paare von Koeffizienten A und B zur Bildung von Reduktionsfaktoren miteinander multipliziert werden,
- am Ende der Testphase die elastische Trosse abgebaut, deren Restfestigkeit ermittelt und zur Bildung eines realen Reduktionsfaktors mit der ursprünglichen Mindestbruchlast ins Verhältnis gesetzt wird, so daß ein Vergleich mit dem für denselben Zeitpunkt über die Test-Trosse ermittelten Reduktionsfaktor ermöglicht wird,
- die aktuellen Reduktionsfaktoren einer zukünftigen Trosse aus dem Koeffizienten B, ermittelt über die Ermüdungskurve und das aktuelle Lastspektrum, sowie aus dem Koeffizienten A, abgegriffen aus dem umweltabhängigen Diagramm, gebildet werden,
- aus den aktuellen Reduktionsfaktoren einer zukünftigen Trosse deren Restlebensdauer unter Einbeziehung eines Sicherheitsfaktors abgeschätzt wird.

Die Erfindung basiert auf der Erkenntnis, daß die Lebensdauer der elastischen Trosse abhängig ist zum einen von den mechanischen Belastungen, nämlich von deren Höhe sowie von der Anzahl der Lastwechsel, und zum anderen von den jeweiligen Umweltbedingungen, die selbstverständlich von Einsatzort zu Einsatzort unterschiedlich sein können. In das Lastspektrum gehen neben dem Wellenspektrum (Höhe, Länge und Häufigkeit der Wellen) vor allem auch Wind- und Strömungsbedingungen ein. Die Umwelteinflüsse werden bestimmt vor allem durch den Salzgehalt und die Temperatur des Wassers, die Intensität der UV-Strahlung und die Wasserbiologie, die für den Bewuchs der Trosse ausschlaggebend ist. Ferner spielt auch die Wasseraufnahmefähigkeit der Trosse eine Rolle.

Das Verfahren nach der Erfindung ermöglicht eine Überlagerung dieser Parameter. Der erste Koeffizient A berücksichtigt den Festigkeitsverlust der Trosse, der aus den aktuellen Umwelteinflüssen resultiert, während der zweite Koeffizient B den auf das Lastspektrum zurückgehenden Festigkeitsverlust repräsentiert. Die Kombination der beiden Koeffizienten ergibt dann den eigentlichen Reduktionsfaktor.

Gerechnet wird mit der Mindestbruchlast, da sich diese experimentell ermitteln und mit den Angaben des Herstellers vergleichen läßt. Ausschlaggebend ist natürlich diejenige Last, die einen vorgegebenen Sicherheitsabstand zur Mindestbruchlast einhält. Eine entsprechende Berücksichtigung erfolgt durch Ansatz des Sicherheitsfaktors.

Der Reduktionsfaktor, der <1 ist, wird mit der ursprünglichen Mindestbruchlast multipliziert und ergibt die verbleibende Mindestbruchlast, die unter Einbeziehung des Sicherheitsfaktors eine Abschätzung der Restlebensdauer zuläßt.

Vorzugsweise wählt man die Anzahl der Abschnitte der Test-Trosse und den Abnahmezyklus derart, daß die vom Hersteller empfohlene Lebensdauer der elastischen Trosse überschritten werden kann. Man wird eine derartige Überschreitung riskieren können, wenn es sich aus der über die Test-Trosse ermittelten Restfestigkeit ergibt, daß noch ein erhebliches Potential an Restfestigkeit zur Verfügung steht. Die elastische Trosse kann unter diesen Bedingungen unbedenklich noch eine Zeitspanne in Betrieb bleiben. Ist sie dann abgebaut worden, läßt sich nachweisen, daß die tatsächliche Restfestigkeit der elastischen Trosse mit der über die Test-Trosse ermittelten Restfestigkeit übereinstimmt.

Die Reduktionsfaktoren der Abschnitte der Test-Trosse werden vorzugsweise als Restfestigkeits-Diagramm über der Zeit aufgetragen, wobei die besonders vorteilhafte Möglichkeit besteht, das Restfestigkeits-Diagramm über die Testphase hinaus zu extrapolieren.

Aus Gründen der Praktikabilität empfiehlt es sich, eine Test-Trosse zu verwenden, deren Durchmesser kleiner ist als der der elastischen Trosse. Wie erwähnt, beträgt der Durchmesser der elastischen Trosse 10 bis 20 cm. Als Durchmesser der Test-Trosse haben sich 4 bis 5 cm bewährt.

Um die Test-Trosse exakt denselben Umweltbedingungen wie die elastische Trosse auszusetzen, ist es vorteilhaft, die beiden Trossen miteinander zu verbinden. Im Hinblick auf den Durchmesserunterschied ist dies für die Steifigkeit der elastischen Trosse nur von vernachlässigbarer Bedeutung. Wesentlich ist allerdings, die gegenseitige Verbindung reibungsfrei zu gestalten, um diesbezügliche Einflüsse auf die Tragkraft der beiden Trossen zuverlässig auszuschließen.

Es ist davon auszugehen, daß eine Abnahme der Abschnitte der Test-Trosse in Zeitabständen von drei Monaten einen optimalen Kompromiß darstellt, und zwar zum einen im Hinblick auf den Aufwand bei der Erstellung des Restfestigkeits-Diagramms und zum anderen im Hinblick auf dessen Genauigkeit.

In wesentlicher Weiterbildung der Erfindung wird vorgeschlagen, daß in Abhängigkeit von einem Vergleich zwischen den Ergebnissen von Vorversuchen und den Herstellerangaben die Bestimmung der Mindestbruchlast der abgenommenen Abschnitte der Test-Trosse durch Tests an den Abschnitten selbst oder durch Einzelfadentests an deren Fäden durchgeführt wird. Man wird diejenige Bestimmungsmethode wählen, deren Ergebnis den höchsten Grad der Übereinstimmung mit den Angaben des Herstellers ergibt.

Die dynamischen Versuche zum Erstellen der Ermüdungskurve werden vorteilhafterweise an Einzelfäden durchgeführt, wobei ein weiteres vorteilhaftes Merkmal darin besteht, die Ermüdungskurve ähnlich einer Wöhler-Kurve zu erstellen.

Ferner wird in Weiterbildung der Erfindung vorgeschlagen, die Koeffizienten B durch Ansatz der auf den Stahlbau zurückgehenden "Palgren-Miner-Hypothese" zu ermitteln.

Ferner wird in Weiterbildung der Erfindung vorgeschlagen, eine Test-Trosse zu verwenden, deren Länge nicht unter die Mindestlänge der vor Ort überwiegend zu erwartenden Wellenlängen sinkt. Dies kann dadurch geschehen, daß man die Länge der einzelnen Abschnitte der Test-Trosse entsprechend wählt, was unter Umständen recht aufwendig ist. Vorteilhafter kann es daher sein, die Test-Trosse über einen Verlängerungs-Abschnitt mit der zugehörigen Boje zu verbinden. Lediglich der Verlängerungs-Abschnitt muß dabei an die vor Ort überwiegend zu erwartenden Wellenlängen angepaßt sein.

Eine andere vorteilhafte Ausgestaltung der Erfindung besteht darin,
- daß an den Enden der Abschnitte der Test-Trosse Schlaufen angespleißt werden,
- daß die Schlaufen benachbarter Abschnitte übereinandergelegt werden und
- daß die Stränge der übereinanderliegenden Schlaufen umwickelt werden. Dies stellt eine sehr einfache Verbindung zwischen den einzelnen Abschnitten dar, die sich darüber hinaus problemlos lösen läßt.

Im folgenden wird ein bevorzugtes Ausführungsbeispiel des erfindungsgemäßen Verfahrens anhand der beigefügten Zeichnung näher erläutert. Die Zeichnung zeigt in:
Figur 1 in schematischer Darstellung eine Test-Trosse;
Figur 2 eine Zusammenstellung der zusätzlich zu bestellenden Elemente.

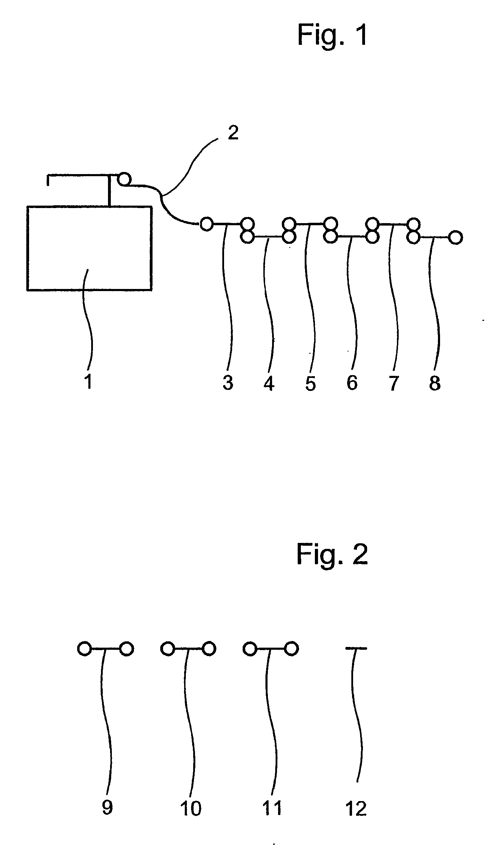

Die Test-Trosse nach Figur 1 ist an einer Boje 1 befestigt. Letztere dient auch zur Befestigung der nicht-dargestellten elastischen Trosse, an der ein ebenfalls nicht dargestelltes Wasserfahrzeug im Falle eines Sturms vertäut wird. Die Test-Trosse besteht aus einem Verlängerungs-Abschnitt 2, dessen Länge an die Mindestlänge der vor Ort überwiegend zu erwartenden Wellenlängen angepaßt ist, sowie aus sechs anschließenden Abschnitten, nämlich den Abschnitten 3 bis 8. Die Abschnitte 3 bis 8 sind von gleicher Länge und besitzen, ebenso wie der Abschnitt 2, einen Durchmesser von 4,5 cm. Im Vergleich dazu beträgt der Durchmesser der elastischen Trosse 16 cm. Die Abschnitte 2 bis 8 sind, wie schematisch angedeutet, lösbar miteinander verbunden.

Figur 2 zeigt drei weitere Abschnitte 9 bis 11, die mit den Abschnitten 3 bis 8 übereinstimmen, sowie einen Abschnitt 12 ohne Befestigungsenden, der zur Entnahme von Einzelfäden dient.

Die Fäden der Test-Trosse stimmen, sabgesehen von ihrer Länge, mit den Fäden der elastischen Trosse überein.

Der Trossenhersteller hat Angaben zur Mindestbruchlast der Test-Trosse geliefert. Diese werden anhand der Abschnitte 9 bis 11 überprüft. Durch Verwendung von drei Abschnitten können gewisse Schwankungen ausgemittelt werden. Parallel dazu werden Tests an Einzelfäden durchgeführt, die man dem Abschnitt 12 entnommen hat. Aus diesen Einzelfadentests wird gemäß DIN EN 919 die Mindestbruchlast der Abschnitte 3 bis 8 ermittelt. Anschließend vergleicht man die Testergebnisse mit den vom Hersteller gelieferten Angaben und entscheidet, ob die Prüfung der Abschnitte 3 bis 8 nach ihrer Entnahme entweder nach der erstgenannten oder nach der zweitgenannten Methode erfolgen soll.

Zu den Vorversuchen gehört ferner die Erstellung einer S-N-Ermüdungskurve ähnlich einer Wöhler-Kurve, und zwar auf der Basis von Einzelfäden, die wiederum dem Abschnitt 12 entnommen worden sind. Damit sind die Vorversuche beendet.

Es erfolgt das Auslegen der elastischen Trosse und deren Befestigung an der Boje 1, und zwar unter Zwischenschaltung eines nicht-dargestellten Lastüberwachungssystems. Sodann wird die Test-Trosse ausgelegt und reibungsfrei mit der elastischen Trosse verbunden.

Nach Ablauf von drei Monaten entnimmt man der Test-Trosse den Abschnitt 8 und ermittelt dessen Mindestbruchlast, und zwar, in Abhängigkeit von der oben getroffenen Entscheidung, entweder durch Prüfung des Abschnitts selbst oder durch Einzelfadentests. Bezogen auf die ursprüngliche Mindestbruchlast ergibt sich ein Faktor A, der den Tragkraftverlust infolge der Umwelteinflüsse abbildet.

Außerdem wird die vorher ermittelte Ermüdungskurve über die "Palgren-Miner-Hypothese" mit dem vom Überwachungssystem zum Zeitpunkt der Abnahme des Abschnitts 8 gelieferten Lastspektrum verknüpft, woraus ein Faktor B resultiert, der den Tragkraftverlust in Folge der Lasteinflüsse abbildet.

Die Faktoren A und B werden miteinander multipliziert und ergeben einen Reduktionsfaktor.

In gleicher Weise wird mit den Abschnitten 7, 6 und 5 verfahren.

Die Koeffizienten der Abschnitte 8 bis 5 werden als umweltabhängiges Diagramm über der Zeit aufgetragen. Ferner kann aus den Reduktionsfaktoren ein lastspektrum- und umweltabhängiges Restfestigkeits-Diagramm erstellt werden, das sowohl die Umwelt- als auch die Lasteinflüsse repräsentiert.

Nach Entnahme des Abschnitts 5 ist ein Jahr verstrichen. Zeigt das Restfestigkeitsdiagramm, daß noch ein erheblicher Überschuß an Restfestigkeit vorhanden ist, setzt man die Testserie mit den Abschnitten 4 und 3 fort.

Nach dem Abbau der elastischen Trosse wird deren Restfestigkeit, also die reale Mindestbruchlast ermittelt, wobei im Hinblick auf den Durchmesser der elastischen Trosse lediglich Einzelfadentests in Frage kommen. Durch einen Vergleich mit der zum Abbauzeitpunkt der elastischen Trosse über die Test-Trosse ermittelten Restfestigkeit wird sichergestellt, daß letztere mit der realen Restfestigkeit der elastischen Trosse übereinstimmt. Ggf. ist eine Extrapolation des Restfestigkeits-Diagramms möglich.

Zur Bestimmung der Lebensdauer einer zukünftigen elastischen Trosse wird in Zeitabständen der Koeffizient B ermittelt, und zwar auf der Basis des aktuellen Lastspektrums und der vorliegenden Ermüdungskurve durch Ansatz der "Palgren-Miner-Hypothese". Außerdem wird für denselben Zeitpunkt der Koeffizient A aus dem umweltabhängigen Diagramm abgegriffen. Eine Multiplikation der Koeffizienten A und B ergibt den aktuellen Reduktionsfaktor <1, der durch Multiplikation mit der ursprünglichen Mindestbruchlast zur aktuellen Restfestigkeit führt. Unter Ansatz des Sicherheitsfaktors läßt sich dann die restliche Lebensdauer abschätzen.

Im Rahmen der Erfindung sind durchaus Abwandlungsmöglichkeiten gegeben. So kann auf den Verlängerungs-Abschnitt 2 verzichtet werden, sofern die Abschnitte 3 bis 8, bezogen auf die vor Ort überwiegend zu erwartenden Wellenlängen, ausreichend lang sind. Ferner ist die Testreihe nicht auf sechs Abschnitte beschränkt, sondern kann durchaus zusätzliche Abschnitte aufweisen, die die Testzeit entsprechend verlängern. Letzteres ist auch dadurch möglich, daß man den Abnahmezyklus der Abschnitte verlängert. Auch kann der Abnahmezyklus verkürzt werden, sofern differenziertere Ergebnisse erwünscht sind.

In der Regel wird man davon ausgehen müssen, daß die kritischen Parameter von Einsatzort zu Einsatzort unterschiedlich sind. Dementsprechend wird für jeden Einsatzort eine spezielle Testreihe erforderlich sein. Gleiches gilt im Hinblick auf unterschiedliches Trossenmaterial. Sollten allerdings identische Verhältnisse vorliegen, sind die Ergebnisse übertragbar.

## Patentansprüche

1. Verfahren zum Bestimmen der Restlebensdauer von aus Einzelfäden bestehenden elastischen Trossen, die zum Vertäuen eines Wasserfahrzeugs an einer zugehörigen Boje dienen, wobei
- für die Fäden der Trosse durch dynamische Versuche eine Ermüdungskurve erstellt wird,
- aus dem Material der Trosse eine Test-Trosse hergestellt wird, die aus einer Reihe von lösbar aneinander befestigten Abschnitten besteht,
- die Mindestbruchlast der Abschnitte der Test-Trosse ermittelt wird,
- das Wasserfahrzeug mit einer der elastischen Trossen unter Zwischenschaltung eines Lastüberwachungssystems an der zugehörigen Boje vertäut wird,
- benachbart zur elastischen Trosse die Test-Trosse ausgelegt wird,
- von der Test-Trosse in vorgegebenen Zeitabständen Abschnitte abgenommen werden,
- für jeden abgenommenen Abschnitt der Test-Trosse die Mindestbruchlast ermittelt und unter Bezugnahme auf die ursprüngliche Mindestbruchlast ein erster Koeffizient A gebildet wird, welcher den Tragkraftverlust in Folge der Umwelteinflüsse abbildet,
- aus den für sämtliche Abschnitte der Test-Trosse ermittelten Koeffizienten A ein umweltabhängiges Diagramm über der Zeit erstellt wird,
- jedem ersten Koeffizienten A ein zweiter Koeffizient (B) zugeordnet wird, der für den Zeitpunkt der Abnahme des zugehörigen Abschnitts der Test-Trosse auf der Basis des vom Lastüberwachungssystem gelieferten Lastspektrums (Belastungshäufigkeit und -stärke über der Zeit) aus der Ermüdungskurve ermittelt wird und den Tragkraftverlust in Folge der Lasteinflüsse abbildet,
- die Paare von Koeffizenten A und B zur Bildung von Reduktionsfaktoren miteinander multipliziert werden,
- am Ende der Testphase die elastische Trosse abgebaut, deren Restfestigkeit ermittelt und zur Bildung eines realen Reduktionsfaktors mit der ursprünglichen Mindestbruchlast ins Verhältnis gesetzt wird, so daß ein Vergleich mit dem für denselben Zeitpunkt über die Test-Trosse ermittelten Reduktionsfaktor ermöglicht wird,
- die aktuellen Reduktionsfaktoren einer zukünftigen Trosse aus dem Koeffizienten B ermittelt über die Ermüdungskurve und das aktuelle Lastspektrum, sowie aus dem Koffizienten A, abgegriffen aus dem umweltabhängigen Diagramm, gebildet werden und
- aus den aktuellen Reduktionsfaktoren einer zukünftigen Trosse deren Restlebensdauer unter Einbeziehung eines Sicherheitsfaktors abgeschätzt wird.

2. Verfahren nach Anspruch 1, **dadurch gekennzeichnet, daß** die Reduktionsfaktoren der Abschnitte der Test-Trosse als Restfestigkeits-Diagramm über der Zeit aufgetragen werden.

3. Verfahren nach Anspruch 2, **dadurch gekennzeichnet, daß** das Reftfestigkeits-Diagramm über die Testphase hinaus extrapoliert wird.

4. Verfahren nach einem der Ansprüche 1 bis 3, **dadurch gekennzeichnet, daß** eine Test-Trosse verwendet wird, deren Durchmesser kleiner ist als der der elastischen Trosse.

5. Verfahren nach einem der Ansprüche 1 bis 4, **dadurch gekennzeichnet, daß** die Test-Trosse reibungsfrei mit der elastischen Trosse verbunden wird.

6. Verfahren nach einem der Ansprüche 1 bis 5, **dadurch gekennzeichnet, daß** die Abschnitte der Test-Trosse in Zeitabständen von drei Monaten abgenommen werden.

7. Verfahren nach einem der Ansprüche 1 bis 6, **dadurch gekennzeichnet, daß** in Abhängigkeit von einem Vergleich zwischen den Ergebnissen von Vorversuchen und den Herstellerangaben die Bestimmung der Mindestbruchlast der abgenommenen Abschnitte der Test-Trosse durch Tests an den abgenommenen Abschnitten selbst oder durch Einzelfadentests an deren Fäden durchgeführt wird.

8. Verfahren nach einem der Ansprüche 1 bis 7, **dadurch gekennzeichnet, daß** die dynamischen Versuche zum-Erstellen der Ermüdungskurve an Einzelfäden durchgeführt werden.

9. Verfahren nach einem der Ansprüche 1 bis 8, **dadurch gekennzeichnet, daß** die Ermüdungskurve ähnlich einer Wöhler-Kurve erstellt wird.

10. Verfahren nach einem der Ansprüche 1 bis 9, **dadurch gekennzeichnet, daß** die Koeffizienten B durch Ansatz der "Palgren-Miner-Hypothese" ermittelt werden.

11. Verfahren nach einem der Ansprüche 1 bis 10, **dadurch gekennzeichnet, daß** eine Test-Trosse verwendet wird, deren Länge nicht unter die Mindestlänge der vor Ort überwiegend zu erwartenden Wellenlängen sinkt.

12. Verfahren nach Anspruch 11, **dadurch gekennzeichnet, daß** die Test-Trosse über einen Verlängerungs-Abschnitt mit der zugehörigen Boje verbunden wird.

13. Verfahren nach einem der Ansprüche 1 bis 12, **dadurch gekennzeichnet,**
- **daß** an den Enden der Abschnitte der Test-Trosse Schlaufen angespleißt werden,
- **daß** die Schlaufen benachbarter Abschnitte übereinandergelegt werden und
- **daß** die Stränge der übereinanderliegenden Schlaufen umwickelt werden.

## Claims

1. Method of determining the residual service life of elastic cables which consist of single strands and which serve for mooring a water vehicle to an associated buoy, wherein
- a fatigue curve is produced for the strands of the cable by dynamic tests,
- a test cable consisting of a series of sections detachably fastened together is produced from the material of the cable,
- the minimum breakage load of the sections of the first cable is determined,
- the water vehicle is moored by one of the elastic cables with interposition of a load monitoring system to the associated buoy,
- the test cable is laid out adjacent to the elastic cable,
- sections are removed from the test cable at predetermined intervals in time,
- the minimum breakage load is determined for each removed section of the test cable and a first coefficient A reflecting the loss of load-bearing force as a consequence of environmental influences is formed with reference to the original minimum breakage load,
- an environment-dependent diagram over time is created from the coefficients A determined for all sections of the test cable,
- a second coefficient (B) is associated with each first coefficient A, the second coefficient being determined for the point in time of removal of the relevant section of the test cable on the basis of the load spectrum (load frequency and load strength over time), which is supplied by the load monitoring system from the fatigue curve, and reflecting the loss in load-bearing force as a consequence of load influences,
- the pair of coefficients A and B are multiplied together for formation of reduction factors,
- at the end of the test phase the elastic cable is demounted and the residual strength thereof determined and correlated with the original minimum breakage load for formation of an actual reduction factor so that a comparison with the reduction factor determined for the same point in time by way of the test cable is made possible,
- the current reduction factors of a future cable are formed from the coefficient B, ascertained by way of the fatigue curve and the current load spectrum, as well as from the coefficient A, derived from the environment-dependent diagram, and
- the residual service life of a future cable is estimated from the current reduction factors thereof with inclusion of a safety factor.

2. Method according to claim 1, **characterised in that** the reduction factors of the sections of the test cable are recorded over time as a residual strength diagram.

3. Method according to claim 2, **characterised in that** the residual strength diagram is extrapolated over the test phase.

4. Method according to one of claims 1 to 3, **characterised in that** use is made of a test cable having a diameter smaller than that of the elastic cable.

5. Method according to one of claims 1 to 4, **characterised in that** the test cable is connected in friction-free manner with the elastic cable.

6. Method according to one of claims 1 to 5, **characterised in that** the sections of the test cable are removed at intervals of time of three months.

7. Method according to one of claims 1 to 6, **characterised in that** the determination of the minimum breakage load of the removed sections of the test cable is carried out by tests on the removed sections themselves or by individual strand tests on strands thereof in dependence on a comparison between the results of prior tests and the manufacturer data.

8. Method according to one of claims 1 to 7, **characterised in that** the dynamic tests for determination of the fatigue curve are carried out on single strands.

9. Method according to one of claims 1 to 8, **characterised in that** the fatigue curve is set up similarly to a stress-number curve.

10. Method according to one of claims 1 to 9, **characterised in that** the coefficient B is determined by use of the Palgren-Miner hypothesis.

11. Method according to one of claims 1 to 10, **characterised in that** use is made of a test cable having a length not reducing below the minimum length of the wave lengths predominantly expected in situ.

12. Method according to claim 11, **characterised in that** the test cable is connected with the associated buoy by way of an extension section.

13. Method according to one of claims 1 to 12, **characterised in that** loops are spliced onto the ends of the sections of the test cable, the loops of adjacent sections are laid one over the other and the strands of the loops lying one over the other are wrapped.

## Revendications

1. Procédé de détermination de la durée de vie restante d'aussières élastiques composées de fils simples qui servent à l'amarrage d'un bateau à une bouée associée, sachant que:
- pour les fils de l'aussière, une courbe de fatigue est établie par des essais dynamiques,
- à partir du matériau de l'aussière, une aussière d'essai est réalisée, laquelle est composée d'une série de segments fixés les uns aux autres de manière détachable,
- la charge de rupture minimale des segments de l'aussière d'essai est calculée,
- le bateau est amarré, par l'une des aussières élastiques par l'intermédiaire d'un système de surveillance de la charge, à la bouée associée,
- l'aussière d'essai est larguée de manière adjacente à l'aussière élastique,
- des segments sont enlevés de l'aussière d'essai à des intervalles de temps prédéfinis,
- pour chaque segment enlevé de l'aussière d'essai, la charge de rupture minimale est calculée et un premier coefficient A est établi en référence à la charge de rupture minimale initiale, lequel coefficient illustre la perte de capacité de charge à la suite des influences de l'environnement,
- à partir des coefficients A calculés pour tous les segments de l'aussière d'essai, un graphique dépendant de l'environnement est établi dans le temps,
- à chaque premier coefficient A est attribué un second coefficient (B) qui est calculé pour le moment du retrait du segment relatif de l'aussière d'essai sur la base du spectre de charge (fréquence et intensité de la sollicitation dans le temps), fourni par le système de surveillance de la charge, à partir de la courbe de fatigue et représente la perte de capacité de charge à la suite des influences de la charge,
- les paires de coefficients A et B sont multipliées les unes par les autres pour l'établissement de facteurs de réduction,
- à la fin de la phase d'essai, l'aussière élastique est démontée, aussière dont la solidité résiduelle est calculée et mise en rapport avec la charge de rupture minimale initiale, pour l'établissement d'un facteur de réduction réel, de telle sorte qu'une comparaison avec le facteur de réduction, calculé pour le même moment relativement à l'aussière d'essai, est rendue possible,
- les facteurs de réduction actuels d'une future aussière sont établis à partir du coefficient B calculé par le biais de la courbe de fatigue et du spectre de charge actuel ainsi qu'à partir du coefficient A mesuré à partir du graphique dépendant de l'environnement et
- à partir des facteurs de réduction actuels d'une future aussière dont la durée de vie restante est évaluée avec intégration d'un facteur de sûreté.

2. Procédé selon la revendication 1, **caractérisé en ce que** les facteurs de réduction des segments de l'aussière d'essai sont appliqués en tant que graphique de solidité résiduelle dans le temps.

3. Procédé selon la revendication 2, **caractérisé en ce que** le graphique de solidité résiduelle est extrapolé au-delà de la phase d'essai.

4. Procédé selon l'une quelconque des revendications 1 à 3, **caractérisé en ce qu'**on utilise une aussière d'essai dont le diamètre est inférieur à celui de l'aussière élastique.

5. Procédé selon l'une quelconque des revendications 1 à 4, **caractérisé en ce que** l'aussière d'essai est raccordée sans friction à l'aussière élastique.

6. Procédé selon l'une quelconque des revendications 1 à 5, **caractérisé en ce que** les segments de l'aussière d'essai sont enlevés à des intervalles de temps de trois mois.

7. Procédé selon l'une quelconque des revendications 1 à 6, **caractérisé en ce que**, en fonction d'une comparaison entre les résultats d'essais préliminaires et les indications du fabricant, la détermination de la charge de rupture minimale des segments retirés de l'aussière d'essai est effectuée par des essais réalisés sur les segments retirés mêmes ou par des essais de fils simples sur leurs fils.

8. Procédé selon l'une quelconque des revendications 1 à 7, **caractérisé en ce que** les essais dynamiques sont réalisés pour l'établissement de la courbe de fatigue sur des fils simples.

9. Procédé selon l'une quelconque des revendications 1 à 8, **caractérisé en ce que** la courbe de fatigue est établie de manière similaire à une courbe de Wöhler.

10. Procédé selon l'une quelconque des revendications 1 à 9, **caractérisé en ce que** les coefficients B sont calculés par l'application de « l'hypothèse Palgren Miner ».

11. Procédé selon l'une quelconque des revendications 1 à 10, **caractérisé en ce qu'**on utilise une aussière d'essai dont la longueur ne descend pas en dessous de la longueur minimale des longueurs d'onde auxquelles on s'attend principalement sur place.

12. Procédé selon la revendication 11, **caractérisé en ce que** l'aussière d'essai est raccordée par le biais d'un segment de rallonge à la bouée associée.

13. Procédé selon l'une quelconque des revendications 1 à 12, **caractérisé en ce que**:
- des noeuds coulants sont épissés sur les extrémités des segments de l'aussière d'essai,
- les noeuds coulants de segments adjacents sont superposés et
- les brins des noeuds superposés sont enroulés.
